Europäisches Patentamt

(19) European Patent Office

Office européen des brevets

(11) Publication number: **0 181 569 B1**

## (12) EUROPEAN PATENT SPECIFICATION

(45) Date of publication of patent specification: **02.05.91**  (51) Int. Cl.⁵: **H01M  8/04**

(21) Application number: **85113834.7**

(22) Date of filing: **30.10.85**

(54) **Liquid fuel cell.**

(30) Priority: **31.10.84 JP 229277/84**
**10.04.85 JP 74264/85**

(43) Date of publication of application:
**21.05.86 Bulletin  86/21**

(45) Publication of the grant of the patent:
**02.05.91 Bulletin  91/18**

(84) Designated Contracting States:
**DE FR GB**

(56) References cited:
**EP-A- 0 072 038**
**DE-A- 1 812 870**
**US-A- 3 542 597**

**PATENTS ABSTRACTS OF JAPAN, vol. 7, no.
288 (E-218)[1433], 22nd December 1983; &
JP-A-58 165 274 (HITACHI SEISAKUSHO K.K.)
30-09-1983**

**PATENTS ABSTRACTS OF JAPAN, vol. 8, no.
268 (E-283)[1705], 7th December 1984; & JP-
A-59 138 074 (HITACHI SEISAKUSHO K.K.)
08-08-1984**

(73) Proprietor: **HITACHI, LTD.**
**6, Kanda Surugadai 4-chome
Chiyoda-ku, Tokyo 100(JP)**

(72) Inventor: **Tsukui, Tsutomu
15-6, Ishinazakacho-1-chome
Hitachi-shi(JP)**
Inventor: **Yasukawa, Saburo
20-13, Higashioshima-1-chome
Katsuta-shi(JP)**
Inventor: **Shimizu, Toshio
3473-3, Higashiishikawa
Katsuta-shi(JP)**
Inventor: **Doi, Ryota
308-2, Minamigo Nukada Nakamachi
Naka-gun Ibaraki-ken(JP)**
Inventor: **Yamaguchi, Motoo
2-8, Kanesawacho-7-chome
Hitachi-shi(JP)**
Inventor: **Iwaasa, Shuzou
10-12, Suehirocho-3-chome
Hitachi-shi(JP)**

(74) Representative: **Patentanwälte Beetz sen. -
Beetz jun. Timpe - Siegfried - Schmitt-
Fumian
Steinsdorfstrasse 10
W-8000 München 22(DE)**

## Description

This invention relates to a liquid fuel cell providing a stable operation for a prolonged time under controlled supply of fuel and water.

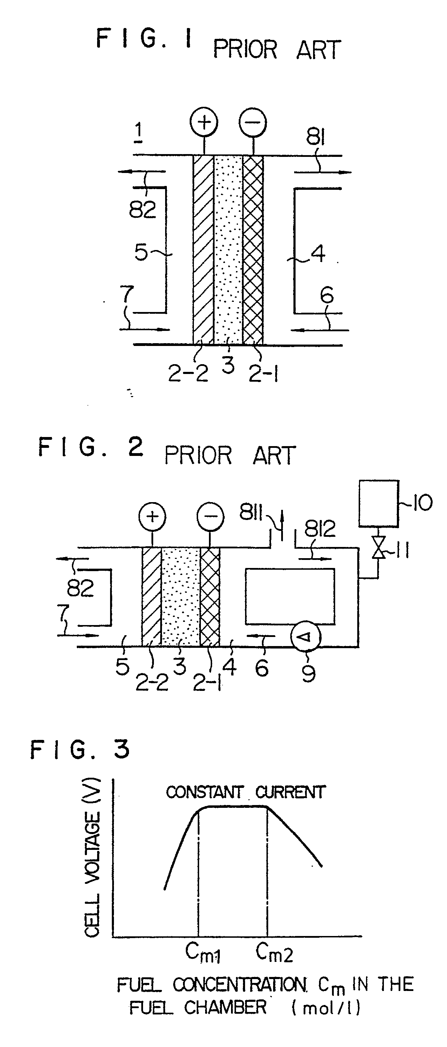

Generally, fuel cells using a liquid fuel are classified into an acid type and an alkali type, and methanol, formalin, hydrazine, etc. are used as fuels. The working principle of such fuel cells will be briefly described with reference to Fig. 1 which is a schematic representation of a prior art fuel cell for showing the operational principle thereof. This fuel cell 1 , symbols + and - show the electrical terminals comprises a fuel electrode 2-1 , an oxidation electrode 2-2 counterposed to the fuel electrode 2-1 (whereby oxygen or air may be used as an oxidizing agent), an electrolyte chamber 3 provided between the oxidation electrode 2-2 and the fuel electrode 2-1 , a fuel chamber 4 provided adjacent to the fuel electrode 2-1 , and an oxidizing chamber 5 provided adjacent to the oxidation electrode 2-2 . The arrow 6 indicates the flow direction of the fuel (which may contain water), or of a mixture of fuel and electrolyte, whereas the arrow 7 likewise shows the flow direction of the oxidizing agent.

The fuel cell as structured above works as follows. When the fuel is supplied to the fuel chamber 4 and when the oxidizing agent 7 is supplied to the oxidizing agent chamber 5 , the fuel permeates into the fuel electrode 2-1 , and electrons are released through electrochemical reaction. When a load is applied to the external circuit, a direct current can be obtained. In this case, a product 81 is formed in the fuel chamber 4 . The product is carbon dioxide gas or carbonate when the fuel is methanol, formic acid or formalin, and nitrogen when the fuel is hydrazine. When the supply of fuel is of a circulating type, the product contains excess fuel or electrolyte, and it is necessary to separate and vent the gaseous product from the circulation system.

On the other hand, when the oxidizing agent is supplied to the oxidizing agent chamber 5 , it permeates and diffuses into the oxidation electrode 2-2 and consumes electrons through the electrochemical reaction. When the electrolyte is of an acid type, a product 82 is formed. The product is mainly water and contains excess air. When the electrolyte is of a base type, water is formed at the fuel electrode 2-1 .

When an aqueous electrolyte solution such as sulfuric acid or potassium hydroxide solution is used in the electrolyte chamber 3 of the fuel cell 1 of Fig. 1, the aqueous solution leaks from the electrolyte chamber 3 and thoroughly permeates also into the electrodes, and a good cell performance can be obtained. However, the aqueous electrolyte solution also leaks into the fuel chamber 4 in this case, and thus it is necessary to supply a fuel mixture containing the aqueous electrolyte solution prepared in advance as anolyte. To this end, the fuel chamber 4 is provided with a circulation system for supplying the fuel mixture to the fuel chamber 4 by a pump 9 and a system for supplying the fuel from a fuel tank 10 through a valve 11 to the circulation system, as shown in Fig. 2.

It has also been proposed to use an aqueous solution of a polymeric electrolyte in the electrolyte chamber 3 in place of the acid electrolyte, and to provide the fuel chamber 4 with a circulation system for a fuel mixture of fuel and water adjusted to a most suitable concentration for the operation as in Fig. 2, and also with a system for supplying the fuel from the fuel tank 10 to the circulation system.

As shown in Fig. 2, the product gas 811 is vented from the circulation system after the passage through the fuel chamber 4 , and the remaining mixture 812 is recycled to the fuel chamber.

According to the conventional fuel supply system as described above, a fuel mixture in a constant mixing ratio prepared in advance is supplied to the circulating system from the single fuel tank 10 shown in Fig. 2. However, it has been found that the consumption ratios of fuel and water in the circulation mixture are not always constant and depend on changes in load, changes in the temperature of the fuel cell during the operation, even when the load is constant, or changes in the flow rate and temperature or the humidity of the air supplied as oxidizing agent.

In a fuel cell using a liquid fuel, the fuel supply system contains two essential components, i.e. fuel and water, and further may contain an electrolyte. In most cases, these three components, i.e. fuel, water and electrolyte, are usually contained in the fuel supply system. Among these three components, fuel and water are consumed. Usually, it is not necessary to take the consumption of electrolyte into consideration. The consumption rate of fuel differs from that of water, because firstly water is always consumed at one electrode, whereas at the other electrode water is always formed as a result of the electrochemical reaction, and the formation of water at the fuel electrode or the oxidation electrode, depends on the acidity or the alkalinity of the electrolyte. That is, in the case of an acidic electrolyte, water is formed at the oxidation electrode and consumed at the fuel electrode, whereas in the case of an alkaline electrolyte, the formation and consumption of water are reversed. In that case, one mole to two moles of water are formed in principle per mole of fuel in the electrochemical reactions, depending on the kind of fuel used. Since the consumption and formation of water take place at different electrodes, water actually tends to migrate through the electrolyte chamber 3 to keep a water balance. Regardless of this tendency, water is short at one electrode and in excess at the other electrode, due to a considerable dissipation of water and the difficulty to maintain a water balance within the electrolyte chamber.

Secondly, the excess or shortage of water due to water imbalance by water migration between the electrodes largely depends on the operating temperature and the load current.

Thirdly, the excess fuel that is not oxidized with generation of electric current at the fuel electrode migrates through the electrolyte chamber and permeates into the oxidation electrode to undergo direct oxidation or water migrates as hydronium ions when the electrolyte ions migrate in the electrolyte chamber in the case of an acidic electrolyte. These phenomena also depend on the load current and the operating temperature of a fuel cell. Furthermore, the amount of water carried by the oxidizing agent, for example, air by evaporation at the oxidation electrode side depends on the feed rate, the temperature and the humidity of the oxidizing agent.

The consumption rate of fuel differs from that of water on the grounds as described above, and thus the supply of a mixture of fuel and water only in a constant mixing ratio from a single tank to the fuel circulation system as shown in Fig. 2 can only compensate for a change in the amount of only one component among the two components, i.e. fuel and water, in the fuel circulation system including the fuel chamber. That is, adequate control concerning both fuel and water cannot be made, and a stable and prolonged operation of such a fuel cell is quite impossible to achieve. That is, the fuel in the fuel circulation system may be so concentrated that much heat is generated or the current output is lowered, or the supply of fuel fails to compensate for the consumption, so that fuel shortage occurs in the fuel system.

In a fuel cell using a liquid fuel, the cell voltage shows a flat peak in a certain range of the concentration $C_m$ of fuel when the current is constant, as may be seen from Fig. 3 which shows the dependence of the cell voltage on the fuel concentration. At a lower fuel concentration $C_m$, fuel shortage occurs, and the cell voltage is lowered, whereas at a higher fuel concentration $C_m$, the excess fuel that fails to take part in the reaction at the fuel electrode 2-1 migrates through the electrolyte chamber 3 and permeates into the oxidation electrode 2-2 to undergo direct combustion. As a result, the potential at the oxidation electrode 2-2 is lowered with generation of heat, and consequently the cell voltage is lowered. When the fuel concentration is too high or too low (e.g. less than $C_{m1}$ or more than $C_{m2}$ in Fig. 3), the ratio of the amount of fuel utilized for for generation of electrical engergy to the total amount of consumed fuel will be lowered, and thus the fuel ultization efficiency is considerably lowered. Accordingly, it is very important to select an appropriate fuel concentration.

The appropriate range of the fuel concentration, i.e. the range of fuel concentration between $C_{m1}$ and $C_{m2}$, as shown in Fig. 3, has been so far experimentally studied by many researchers. For example, for the case of an acidic electrolyte type fuel cell using methanol as fuel, it is disclosed in 24th Cell Panel Discussion Lectures No. 2B02, page 254 that the concentration $C_{m1}$ is 0,5 mol/l, and the concentration $C_{m2}$ is 2 mol/l at a current density of 64 mA/cm². JP-A1-56-118 273 discloses that the concentration $C_{m2}$ is about 5% by mass (about 1,6 mol/l).

On the other hand, even for a liquid fuel cell using hydrazine as fuel, JP-B-48-31300 discloses that stable operation is possible at a concentration of 1,5% by mass (0,5 mol/l), and if the concentration is less than 1,5% by mass, the voltage is lowered, and the temperature is increased.

It is taken from the foregoing that the fuel concentration range for stable operation is between about 0,3 mol/l ($C_{m1}$) and about 2 mol/l ($C_{m2}$).

Thus, the fuel concentration is very important in the fuel cell, and an accurate apparatus for detecting or measuring the fuel concentration is required.

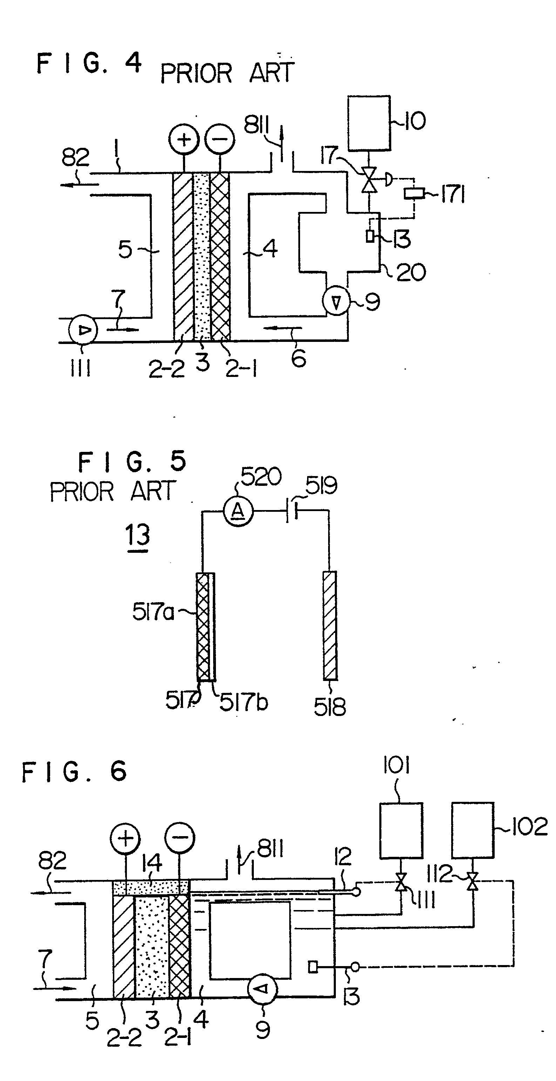

A liquid fuel cell provided with an apparatus for detecting the fuel concentration now in practical use is shown in Fig. 4, where the same components as in Fig 5.1 and Fig. 2 are indicated with the same reference numerals.

An oxidizing agent is supplied to the oxidizing agent chamber 5 by a blower 111 and discharged as a residual gas 82 . On the other hand, the fuel supply system includes a system for circulating a mixture of fuel and an electrolyte solution (anolyte) by a pump 9 and a system for supplying an appropriate amount of fuel to an anolyte tank 20 provided in the circulation system from a fuel tank 10 through a valve 17 . The circulation system is open to the outside at an appropriate position to discharge the product gas 811 .

Fuel is supplied by opening the valve 17 , and opening or closure or control of the valve 17 is made by a detector 13 for detecting the fuel concentration provided in the anolyte tank 20 and a valve controller 171 .

The detector 13 for detecting the fuel concentration comprises an anode 517 , a cathode 518 counterposed to the anode 517 , a power source 519 , and a current detector 520 . The anode 517 comprises an anode plate 517a made of platinum and a membrane 517b tightly laid on the anode plate 517a by pressing.

With such a structure as described above, when a DC voltage of e.g. 0,85 V is applied between the anode 517 and the cathode 518 , the quantity of electric current changes proportionally to the methanol concentration in the anolyte. Thus, it is possible to determine the concentration of the fuel in a very simple structure.

However, although the fuel concentration can be determined by an apparatus such as described above, its detection sensitivity is not very good as will be explained below.

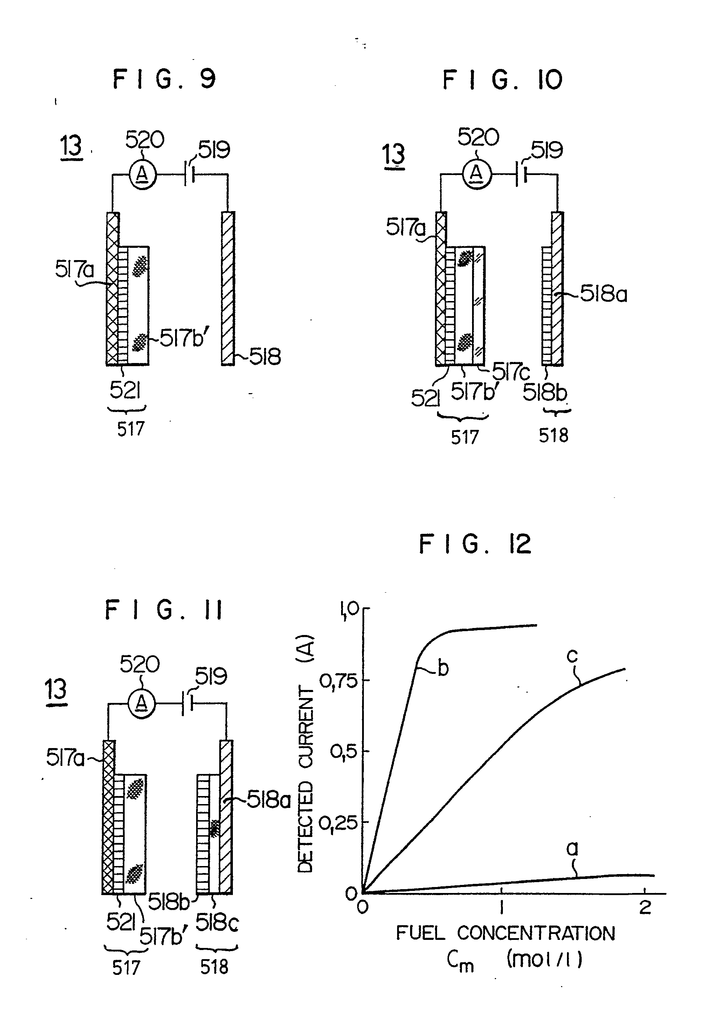

The relationship between the fuel concentration and the detected electric current is shown in Fig. 12, where curve a corresponds to values determined by an apparatus for detecting the fuel concentration using an anode with the membrane as shown in Fig. 5. The electric current changes with the concentration $C_m$, but the change is very small. That is, the detection sensitivity is poor.

Furthermore, the adhesion between the anode plate 517a and the membrane 517b (Fig. 5) is often insufficient and the anolyte tends to stay therebetween, deteriorating the response to changes in the methanol concentration. When a platinum-based catalyst layer is provided on the platinum plate 517a in place of the membrane 517b , the detected current is very high as shown by curve b in Fig. 12, but there is no change in the detected current in the practical fuel concentration range (about 0,3 to about 2 mol/l), and accordingly such a structure cannot be used as a fuel detection concentration detector.

Cyclic voltammetry using a reference electrode and an apparatus for detecting the fuel concentration by means of a small fuel cell is disclosed in JP-A1-56-118273. In the case of cyclic voltammetry, a reference electrode is required in addition to the detecting electrodes, and also a function generator and other devices are required,thus complicating the detecting system and deteriorating the reliability, the most important task of the fuel concentration detector.

In the case of the apparatus using a small fuel cell, not only the apparatus is to be provided in the anolyte tank, but also an additional air supply system is required, and accordingly a reduction of the apparatus size is difficult, and the reliability is reduced.

In the case of using methanol or formalin as fuel rather than using hydrazine as fuel, the detected power output changes in a complicated manner even when detected by means of cyclic voltammetry, and determination is sometimes difficult.

There is an alternative procedure for controlling the fuel supply when the integrated load current becomes constant, since the fuel concentration is proportional to the load current, but when the load is greatly changed, or the operation of the fuel cell is subject to repetitions of discontinuation, the fuel concentration will greatly deviate and cannot be practically determined via the load current.

On the other hand, a semiconductor-based gas concentration sensor requires much time until it is ready for measurement, and thus the response is poor.

JP-A1-58-165274 discloses a methanol-water fuel cell having improved operational stability which comprises two independent tanks, one of which being provided for water and one for methanol, which are connected via valves controlled by a controller to an anolyte circulation system. The liquid fuel level in the fuel chamber is monitored by means of a level sensor connected to the controller. Further, a thermometer is provided in the fuel chamber and connected to the controller which independently supplies fuel and water from the respective tanks by means of the valves into the anolyte. This prior art device, however, suffers from the same principal disadvantages as discussed above, particularly with respect to the detection of the fuel concentration in the anolyte.

Accordingly, there was a strong demand for a liquid fuel cell comprising a reliable apparatus for detecting the fuel concentration on the basis of a simple structure.

It is the object of the present invention is to provide a liquid fuel cell with improved supply of fuel and water to a fuel circulation system which can operate continuously and stably for a prolonged time, and wherein the different consumption rates of fuel and water are taken into account in the control system.

This liquid fuel cell should be provided with an apparatus for detecting the fuel concentration with high reliability and high sensitivity which has a simple structure.

This object is achieved according to claim 1. The dependent claims relate to prefered embodiments.

The liquid fuel cell according to the present invention comprises
- a fuel electrode,
- a fuel chamber provided adjacent to the fuel electrode and comprising a liquid fuel mixture circulation system for the anolyte including a pump and being connected via dosage means controlling the liquid flow to two tanks for water and fuel supply,
- an oxidation electrode,
- an oxidizing agent chamber provided adjacent to the oxidation electrode and being supplied with an oxidizing agent,
- a level sensor provided in the fuel circulation system and detecting the liquid level therein, the output signal of the level sensor being used for controlling the dosage means, and

- an electrolyte provided in an electrolyte chamber between the fuel electrode and the oxidation electrode and is **characterised** in that
- the first tank is provided to contain a water-rich fuel-water mixture,
- the dosage means are connected to the first tank,
- the second tank is provided to contain a fuel-rich fuel-water mixture,
- a detector is provided in the circulation system which detects the fuel concentration of the fuel mixture in the circulation system, the output of the fuel cell or the load current of the fuel cell, respectively, and
- the dosage means are connected to the second tank and are controlled in accordance with the output signal of the detector.

The dosage means are preferably valves or pumps.

According to a prefered embodiment, the first tank is provided to contain water-rich fuel-water mixture having a molar ratio of fuel to water of not more than 1, and the second tank is provided to contain fuel-rich fuel-water mixture having a molar ratio of water to fuel of not more than 5.

The fuel is preferably methanol.

It is advantageous to provide water recovering means for recovering water discharged from the oxidizing agent chamber into the first tank, preferably a water recovery trap.

In accordance with another prefered embodiment, the detector is detecting the fuel concentration by electrochemical reactions and comprises an anode consisting of an anode plate provided with a catalyst layer and a fuel-controlling layer provided thereon and having a controlled fuel permeability, a cathode electrode, a power source and a current detector connected in series to the anode and the cathode being dipped in the fuel mixture.

The anode of the fuel cell according to the invention preferably has a second fuel-controlling layer provided on the fuel-controlling layer

According to another prefered embodiment, the cathode of the fuel cell comprises a cathode plate other than a platinum plate, and a catalyst layer provided thereon; an electroconductive porous layer is provided between the cathode plate other than a platinum plate and the catalyst layer.

The fuel-controlling layer is preferably made of a carbon fiber paper obtained by treating with a suspension of fine polytetrafluoroethylene particles and subsequent baking, or of a porous carbon sheet, of a sintered metal, of insulating sintered ceramics or of an organic porous material.

The catalyst layer provided on one side of the fuel-controlling layer is preferably made by kneading a platinum-based catalyst with a suspension of fine polytetrafluoroethylene particles, applying the mixture to one side of the fuel-controlling layer and subsequent baking.

The anode plate is advantageously of tantalum.

According to a prefered embodiment of the present invention, the detector for detecting the fuel concentration by means of electrochemical reactions comprises an anode provided with a fuel-controlling layer of controlled fuel permeability for controlling the permeation of fuel through the catalyst layer, a cathode, a power source and a current detector, the anode and the cathode being in contact with the fuel mixture, and a voltage being applied to the electrodes.

Fuel cannot be too concentrated in the fuel circulation system, because at a higher fuel concentration, excess fuel is liable to permeate into the oxidation electrode from the fuel electrode through the electrolyte chamber, and to undergo direct oxidation, i.e. direct consumption, which leads to a considerable lowering of the fuel utilization efficiency. Usually, the fuel concentration in the fuel circulation system is about 0,3 to about 2 mol/l, and the absolute amount of fuel in the fuel circulation system is small.

Thus, in the present invention a fuel concentration detector is used to detect the fuel concentration in the fuel circulation system and to control the supply fuel, or a detector detecting the output voltage or the output current of the fuel cell are used, because the output voltage or current is reduced as fuel concentration is lowered. When the detected value becomes lower than the standard concentration, a signal to open the dosage means of the fuel tank is emitted to supply fuel into the fuel circulation system.

A considerably large amount of water is present in the fuel circulation system, and thus it is preferable to supply the water to the fuel circulation system after checking whether a predetermined amount of water is retained in the fuel circulation system or not. To this end, a liquid level sensor is provided in the fuel circulation system of the fuel cell to detect whether the liquid level becomes lower than the standard level or not. When the detected liquid level is lower than the predetermined level, a signal to open the dosage means of the tank containing the water-rich mixture is emitted to supply water to the fuel circulation system.

In the present invention, two tanks are provided both storing mixtures of fuel and water. When only fuel is supplied to the fuel circulation system from a pure fuel tank, a local and transient higher fuel concentration may occur in the fuel circulation system due to the restricted circulation rate, thus undesirably lowering the fuel utilization efficiency.

This problem is solved according to the invention by storing a fuel-rich mixture of fuel and water in the 'fuel' tank. The preferable molar ratio of water to fuel in the fuel-rich mixture is not more than 5. Furthermore, it is preferable to select a ratio approximating the average ratio of the consumption rate of water to that of fuel during the operation of the fuel cell.

When only water is supplied to the fuel circulation system from a pure water tank, a lower fuel concentration may likewise locally and transiently occur in the fuel circulation system due to the restricted circulation rate, and a local fuel shortage may develop, thus lowering the performance of the fuel cell. The problem is solved according to the invention by storing a water-rich mixture of fuel and water in the 'water' tank. The prefered molar ratio of fuel to water in the water-rich mixture is not more than 1,0. It is preferable to select a ratio approximating the fuel concentration in the fuel circulation system in the fuel cell.

In the following, the invention will be explained with reference to Figs.6 to 12,

Fig. 6 is a schematic view of a liquid fuel cell according to one embodiment of the present invention;

Figs. 7 and 8 are schematic views showing liquid fuel cells according to other embodiments of the present invention;

Fig. 9 is a schematic view showing a detector for detecting the fuel concentration according to one of the embodiments of the present invention;

Figs. 10 and 11 are schematic views showing detectors for detecting the fuel concentration according to other embodiments of the present invention;

Fig. 12 is a characteristic diagram showing the relationship between the fuel concentration and the detected electric current.

One embodiment of the present invention will be described with reference to Fig. 6, which relates to a liquid fuel cell using methanol as fuel and sulfuric acid as electrolyte. The electrodes 2 (fuel electrode 2-1 and oxidation electrode 2-2) are each made from a porous carbon plate as a substrate and a catalyst of a platinum-based substance supported on carbon powder, the catalyst being deposited on the substrate. Through the fuel chamber 4 , a liquid mixture of methanol and dilute sulfuric acid and which contains water is circulated as an anolyte by a pump 9 . Carbon dioxide gas is generated at the fuel electrode 2-1 as product gas 811 .

Air is supplied to an oxidizing agent chamber 5 as an oxidizing agent 7 , and the exhaust gas 82 contains formed water at the same time.

A level sensor 12 is provided at a liquid level corresponding to the liquid level threshold value near the upper end of the electrodes 2 in the fuel circulation system. When the liquid level is lowered, the level sensor 12 emits a signal to open the valve representing the dosage means 111 and to supply the necessary amount of water from the tank 101 to the fuel circulation system.

A fuel concentration detector 13 working on the basis of the electrochemical reaction is provided in the fuel circulation system and set to a fuel concentration of 1 mol/l. When the fuel concentration in the fuel circulation system becomes lower than the set value, the detector 13 emits a signal to open the valve representing the dosage means 112 and to supply the necessary amount of fuel from the tank 102 to the fuel circulation system. The dosage means 111 , 112 may also be pumps.

In a liquid fuel cell with the construction of Fig. 6 and having a power output of 100 W at a voltage of 12 V, the circulation rate of the anolyte in the fuel circulation system is set to 700 ml/min, and about 30 ml of water are supplied to the fuel circulation system from the first tank 101 with one opening of the dosage means (valve) 111 in accordance with the signal from the level sensor 12 when the liquid level is lowered in the fuel circulation system. About 10 ml of fuel are supplied to the fuel circulation tank from the second tank 102 with one opening of the dosage means (valve) 112 in accordance with the signal from the fuel concentration detector 13 when the fuel concentration becomes lower than 1 mol/l.

The fuel concentration during operation of the fuel cell is not necessarily 1 mol/l, and operation at a higher fuel concentration is possible, if the load current is relatively large, and alternatively, operation at a lower fuel concentration is also possible, if the load current is relatively small.

For setting the fuel concentration, the set electric current must be changed, because the electric current is a function of the fuel concentration according to the constant voltage system when detection on the basis of the electrochemical reaction is utilized.

As described above, the liquid fuel cell with two tanks according to the invention can be stably operated independently of fluctuations of the load current, the operating temperature or other external conditions.

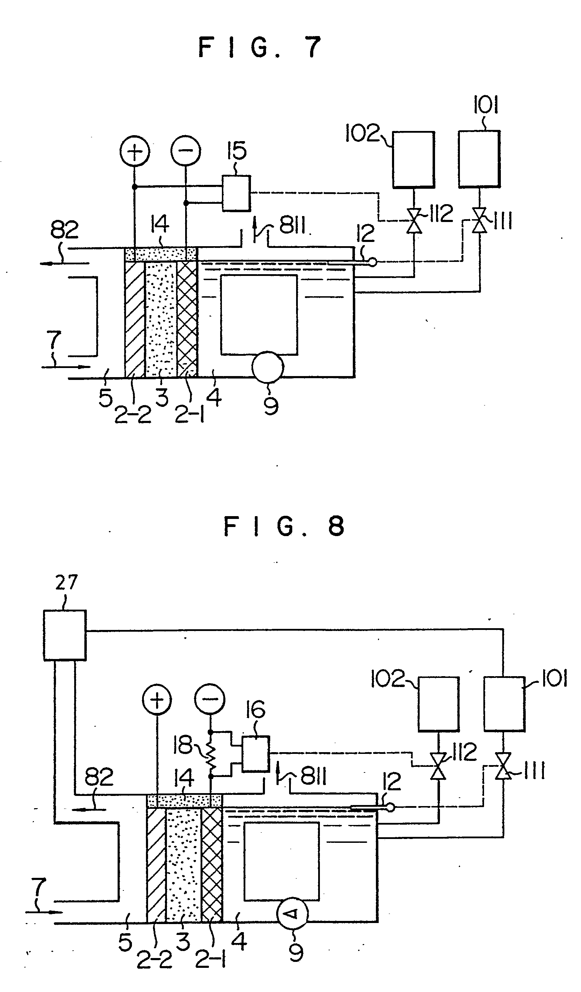

Another embodiment of the present invention will be described below, referring to Fig. 7, where, when the liquid level is detected lower by the liquid level sensor 12 in the same liquid fuel cell as in Fig. 6, a water-rich fuel mixture is supplied from the tank 101 . That is, since the fuel concentration in the fuel circulation system is 1 mol/l, the water-rich fuel mixture in the tank 101 is made to have a methanol concentration of 1 mole/l. That is, the molar ratio of methanol to water is about 0,02.

In place of measuring the fuel concentration in the fuel circulation system, such a phenomenon that the output voltage is lowered as the fuel concentration is decreased can be also utilized. To this end, a detector 15 detecting the output voltage is provided, and when a decrease in the output voltage is detected, the valve 112 of the tank 102 is opened upon a signal from the detector 15 to supply the fuel mixture to the fuel circulation system. In that case, a fuel-rich mixture of fuel and water is supplied from the tank 102 to suppress a local and transient increase of the fuel concentration in the fuel circulation system. The molar ratio of water to methanol in the fuel-rich mixture in the tank 102 is 2,0. In this case, the total volume of water and fuel in both tanks is the same as in the embodiment of Fig. 6.

Since in this embodiment, both tanks 101 and 102 contain fuel mixtures, and local and transient unbalanced fuel concentration in the fuel circulation system can be avoided, and thus the circulation rate of the pump 9 through the fuel circulation system can be considerably reduced, and a good fuel cell performance can be obtained even at a reduced circulation rate of 200 ml/min.

A further embodiment of the present invention is shown in Fig. 8, where the the fuel cell as such corresponds to that of Fig. 7 with the difference that a signal for supplying a fuel-rich mixture from the tank 102 to the fuel circulation system is emitted in accordance with a decrease in the load current of the liquid fuel cell. A detector 16 is connected to the end points of a resistor 18 connected in series at the fuel electrode 2-1 , and the valve 112 is opened upon a signal from the detector 16 . A further difference from the fuel cell of Fig. 7 is that a portion or all the water contained in the exhaust gas 82 from the oxidizing agent chamber 5 is recovered in a trap serving as water recovery means 27 and returned to the tank 101 . By the provision of the water recovery trap, the capacity of the tank 101 can be reduced.

In the foregoing embodiments, liquid fuel cells using methanol as fuel and an acidic electrolyte have been described, but the present invention is readily applicable also to alkaline type liquid fuel cells using methanol as fuel, and other liquid fuel cells using hydrazine, formaldehyde, etc. as fuels by providing the fuel cell with two tanks and appropriately selecting fuel-water ratios of the fuel mixtures in the tanks, as described above.

When an apparatus for detecting the fuel concentration according to the following embodiments is used in the present liquid fuel cell, the effects of the present liquid fuel cell can be further improved, as described below.

Fig. 9 is a schematic representation of an apparatus 516 for detecting the fuel concentration according to one embodiment of the present invention, which comprises an anode 517 , a cathode 518 , a power source 519 and a current detector 520 , as in the prior art, but the anode 517 comprises a catalyst layer 521 and a fuel-controlling layer 517b' provided thereon according to the present invention. The fuel-controlling layer 517b' is made from a carbon fiber paper obtained by treating with a suspension of fine polytetrafluoroethylene particles and subsequent baking to give a controlled fuel permeability and a strong water repellency to the paper. The fuel permeation can be adjusted to, for example, about $7 \cdot 10^{-6}$ $mol/cm^2 \cdot min \cdot mol/l$ by the treatment. The platinum-based catalyst layer 521 is provided on one side of the fuel-controlling layer 517b' by kneading the catalyst with the same suspension of fine polytetrafluoroethyleneparticles as used for the fuel controlling layer 517b' and applying the mixture to the one side of the fuel-controlling layer 517b' , followed by baking, thereby bonding the catalyst layer 521 to the fuel-controlling layer 517b' . Then, the resulting integrated layers are tightly laid on an anode plate 517a made from, for example, tantalum to contact the catalyst layer with the anode plate 517a . It is preferable to fix the anode 517 to a frame serving also as a support for the anode so that the fuel can permeate from the fuel-controlling layer side.

That is, resin coats or pad plates of bakelite or glass are laid on all other sides than the fuel-controlling layer 517b' by an adhesive resin to form a seal layer (not shown in the drawings), thereby preventing all the other sides from direct contact with the anolyte.

In a practical test of the apparatus of Fig. 9 (electrode area 4cm²; voltage 0,9 V; fuel permeation through the fuel-controlling layer 517b' $1 \cdot 10^{-6}$ to $2 \cdot 10^{-5}$ $mol/cm^2 \cdot min \cdot mol/l$; fuel concentration 0 to 1,5 mol/l) the detected current had a good linearity and a good sensitivity as may be seen from curve c in Fig. 12. That is, in the apparatus of Fig .9, the provision of the catalyst layer 521 between the anode plate 517a and the fuel-controlling layer 517b' avoids liquid stagnation therebetween and improves the permeation of the liquid, the detection sensitivity and the detection response.

The material of the fuel-controlling layer 517b' according to the present invention is not only a fibrous carbon paper but can be also a porous carbon sheet or an electroconductive porous material such as sintered metal. In that case, the fuel-controlling layer must have only the function to control the permeation of fuel, and thus insulating sintered ceramics or organic porous materials can also be used. To provide the catalyst layer 521 the fuel-controlling layer 517b ', various other techniques such as coating, deposition, electrophoresis, CVD, etc. can also be applied.

In Fig. 10, another embodiment of the present invention is shown, where two fuel-controlling layers 517b ' and 517c are used. That is, a second fuel-controlling layer 517c is provided on the fuel-controlling layer 517b' at the cathode-facing side, which is prepared by kneading a mixture of carbon powders or graphite fluoride powders with a suspension of fine polytetrafluoroethylene particles having water repellency and adhesiveness and applying the kneaded mixture to the surface of the fuel-controlling layer 517b' , followed by baking to integrate these two layers. The cathode 518 comprises a cathode plate 518a other than a platinum plate and a catalyst layer 518b provided on the cathode plate 518a by deposition or by electrophoresis, whereby no special material is required for the cathode plate 518a . That is, a cathode with a good detection sensitivity can be obtained at low costs.

In Fig. 11, a further embodiment of the present invention is shown, where the cathode 518 is improved in that a catalyst layer 518b' is provided on an electroconductive, porous layer 518c which is tightly bound to the cathode plate 518a . As material for the electroconductive porous layer 518c , carbon fiber paper or electroconductive polymers, sintered metals, etc. can be used to ensure a tight adhesion between the cathode plate 518a and the catalyst layer 518b .

The liquid fuel cells according to the present invention can be stably and efficiently operated for a prolonged time in spite of different consumption rates of fuel and water even if the load current or the operating temperature of the fuel cell or the temperature or humidity of the atmosphere are changed.

Further, according to a prefered embodiment of the present invention, an anode having a fuel-controlling layer deposited thereon through the intermediate of a catalyst layer is used for detecting the fuel concentration, and thus no liquid fuel stagnation occurs between the anode and the fuel-controlling layer, thus improving the permeation of liquid fuel and activating the reaction between the electrodes as well as improving the detection sensitivity and response and accordingly the reliability of the apparatus.

**Claims**

1. Liquid fuel cell
   comprising
   - a fuel electrode (2-1),

   - a fuel chamber (4) provided adjacent to the fuel electrode (2-1) and comprising a liquid fuel mixture circulation system for the anolyte including a pump (9) and being connected via dosage means (111, 112) controlling the liquid flow to two tanks (101, 102) for water and fuel supply,
   - an oxidation electrode (2-2),
   - an oxidizing agent chamber (5) provided adjacent to the oxidation electrode (2-2) and being supplied with an oxidizing agent (7),
   - a level sensor (12) provided in the fuel circulation system and detecting the liquid level therein, the output signal of the level sensor (12) being used for controlling the dosage means (111), and
   - an electrolyte provided in an electrolyte chamber (3) between the fuel electrode (2-1) and the oxidation electrode (2-2), **characterized** in that
   - the first tank (101) is provided to contain a water-rich fuel-water mixture,
   - the dosage means (111) are connected to the first tank (101),
   - the second tank (102) is provided to contain a fuel-rich fuel-water mixture,
   - a detector (13, Fig. 6; 15, Fig. 7; 16, Fig. 8) is provided in the circulation system which detects the fuel concentration of the fuel mixture in the circulation system, the output of the fuel cell or the load current of the fuel cell, respectively, and
   - the dosage means (112) are connected to the second tank (102) and are controlled in accordance with the output signal of the detector (13, 15, 16) (Fig. 6).

2. Liquid fuel cell according to claim 1, characterized in that the dosage means (111, 112) are valves.

3. Liquid fuel cell according to claim 1, characterized in that the dosage means (111, 112) are pumps.

4. The fuel cell according to one of claims 1 to 3, characterized in that the first tank (101) is provided to contain water-rich fuel-water mixture having a molar ratio of fuel to water of not more than 1, and the second tank (102) is provided to contain fuel-rich fuel-water mixture having a molar ratio of water to fuel of not more than 5.

5. The fuel cell according to one of claims 1 to 4, characterized in that the fuel is methanol.

6. The fuel cell according to one of claims 1 to 5, characterized in that water recovering means (27) for recovering water discharged from the oxidizing agent chamber (5) into the first tank (101) are provided.

7. The fuel cell according to claim 6, characterized in that the water recovering means (27) are a water recovery trap.

8. The fuel cell according to one of claims 1 to 7, characterized in that the detector (13) is detecting the fuel concentration by electrochemical reactions and comprises an anode (517) consisting of an anode plate (517a) provided with a catalyst layer (521) and a fuel-controlling layer (517b) provided thereon and having a controlled fuel permeability, a cathode electrode (518), a power source (519) and a current detector (520) connected in series to the anode (517) and the cathode (518) being dipped in the fuel mixture (Fig. 9).

9. The fuel cell according to claim 8, characterized in that the anode (517) has a second fuel-controlling layer (517c) provided on the fuel-controlling layer (517b') (Fig. 10).

10. The fuel cell according to claim 8 or 9, characterized in that the cathode (518) comprises a cathode plate (518a) other than a platinum plate, and a catalyst layer (518b) provided thereon (Fig. 10).

11. The fuel cell according to one of claims 8 to 10, characterized in that the cathode (518) comprises a cathode plate (518a) other than a platinum plate, an electroconductive porous layer (518c) provided thereon and a catalyst layer (518b) provided on the porous layer (518c) (Fig. 11).

12. The fuel cell according to one of claims 8 to 11, characterized in that the fuel-controlling layer (517b') is made of a carbon fiber paper obtained by treating with a suspension of fine polytetrafluoroethylene particles and subsequent baking.

13. The fuel cell according to one of claims 8 to 12, characterized in that the fuel-controlling layer (517b') is made of a porous carbon sheet, of a sintered metal, of insulating sintered ceramics or of an organic porous material.

14. The fuel cell according to one of claims 8 to 13, characterized in that the catalyst layer (521) is provided on one side of the fuel-controlling layer (517b') by kneading a platinum-based catalyst with a suspension of fine polytetrafluoroethylene particles, applying the mixture to one side of the fuel-controlling layer (517b') and subsequent baking.

15. The fuel cell according to one of claims 8 to 14, characterized in that the anode plate (517a) is made of tantalum.

**Revendications**

1. Pile à combustible liquide comprenant
   - une électrode à combustible (2-1),
   - une chambre à combustible (4) adjacente à l'électrode à combustible (2-1) et comprenant un système de circulation d'un mélange de combustible liquide servant à former l'anolyte, incluant une pompe (9) et raccordé par l'intermédiaire de moyens de dosage (111,112) commandant l'écoulement de liquide à deux réservoirs (101,102) pour l'alimentation en eau et en combustible,
   - une électrode d'oxydation (2-2),
   - une chambre (5) pour l'agent oxydant, adjacente à l'électrode d'oxydation (2-2) et alimentée avec un agent oxydant (7),
   - un détecteur de niveau (12) disposé dans le système de circulation du combustible et détectant le niveau du liquide dans ce système, le signal de sortie du détecteur de niveau (12) étant utilisé pour commander les moyens de dosage (111), et
   - un électrolyte prévu dans la chambre à électrolyte (3) entre l'électrode à combustible (2-1) et l'électrode d'oxydation (2-2),
   caractérisée en ce que
   - le premier réservoir (101) est destiné à contenir un mélange combustible-eau, riche en eau,
   - les moyens de dosage (111) sont raccordés au premier réservoir (101),
   - le second réservoir (102) est destiné à contenir un mélange combustible-eau, riche en combustible,
   - un détecteur (13,figure 6;15, figure 7; 16,figure 8) est prévu dans le système de circulation qui détecte respectivement la concentration en combustible du mélange combustible dans le système de circulation, la puissance de sortie de la pile à combustible et le courant de charge de cette dernière, et

- les moyens de dosage (112) sont raccordés au second réservoir (102) et sont commandés en fonction du signal de sortie du détecteur (13,15,16) (figure 6).

2. Pile à combustible liquide selon la revendication 1, caractérisée en ce que les moyens de dosage (111, 112) sont des vannes.

3. File à combustible liquide selon la revendication 1, caractérisée en ce que les moyens de dosage (111, 112) sont des pompes.

4. Pile à combustible selon l'une des revendications 1 à 3, caractérisée en ce que le premier réservoir (101) est destiné à contenir un mélange combustible-eau, riche en eau et possédant un rapport molaire du combustible à l'eau non supérieur à 1, et le second réservoir (102) est destiné à contenir un mélange combustible-eau riche en combustible et possédant un rapport molaire de l'eau au combustible non supérieur à 5.

5. Pile à combustible selon l'une des revendications 1 à 4, caractérisée en ce que le combustible est du méthanol.

6. Pile à combustible l'une des revendications 1 à 5, caractérisée en ce qu'il est prévu des moyens (27) de récupération de l'eau, servant à récupérer l'eau refoulée de la chambre (5) contenant l'agent oxydant, dans le premier réservoir (101).

7. Pile à combustible selon la revendication 6, caractérisée en ce que les moyens (27) de récupération de l'eau sont un piège à récupération d'eau.

8. Pile à combustible selon l'une des revendications 1 à 7, caractérisé en ce que le détecteur (13) détecte la concentration de combustible au moyen de réactions électrochimiques et comporte une anode (517) constituée par une plaque d'anode (517a) comportant une couche de catalyseur (521) et une couche (517b) de contrôle du combustible, disposée sur la couche de catalyseur et possédant une perméabilité commandée pour le combustible, une électrode formant cathode (518), une source d'énergie (519) et un détecteur d'intensité (520), branchés en série avec l'anode (517) et la cathode (518), qui sont immergées dans le mélange combustible (figure 9).

9. Pile à combustible selon la revendication 8, caractérisée en ce que l'anode (517) possède une seconde couche (517c) de contrôle du combustible prévue sur la couche (517b') de contrôle du combustible (figure 10).

10. Pile à combustible selon la revendication 8 ou 9, caractérisée en ce que la cathode (518) comporte une plaque de cathode (518a) autre qu'une plaque en platine, et une couche de catalyseur (518b) disposée sur cette plaque d'électrode (figure 10).

11. Pile à combustible selon l'une quelconque des revendications 8 à 10, caractérisée en ce que la cathode (518) comporte une plaque de cathode (518a) autre qu'une plaque en platine, une couche électroconductrice poreuse (518c) disposée sur la plaque de cathode et une couche de catalyseur (518b) disposée sur la couche poreuse (518c) (figure 11).

12. Pile à combustible selon l'une des revendications 8 à 11, caractérisée en ce que la couche (517b') de contrôle du combustible est constituée par du papier incluant des fibres de carbone et obtenu par traitement à l'aide d'une suspension de fines particules de polytétrafluoroéthylène et cuisson ultérieure.

13. Pile à combustible selon l'une des revendications 8 à 11, caractérisée en ce que la couche (517b') de contrôle du combustible est formée d'une feuille en carbone poreux, d'un métal fritté, d'une céramique frittée isolante ou d'un matériau poreux organique.

14. Pile à combustible selon l'une des revendications 8 à 13, caractérisée en ce que la couche de catalyseur(521) est appliquée sur une face de la couche (517') de contrôle du combustible, au moyen du malaxage d'un catalyseur à base de platine avec une suspension de fines particules de polytétrafluoroéthylène, et de l'application du mélange sur une face de la couche (517b') de contrôle du combustible et cuisson ultérieure.

15. Pile à combustible selon l'une des revendications 8 à 14, caractérisé en ce que la plaque d'anode (517a) est formée de tantale.

**Ansprüche**

1. Flüssigbrennstoffzelle mit
    - einer Brennstoffkammer (4), die neben der Brennstoffelektrode (2-1) angeordnet ist und ein Flüssigbrennstoffgemisch-Kreislaufsystem für den Anolyten einschließlich einer Pumpe (9) umfaßt und über eine Dosiervorrichtung (111, 112) zur Regelung des Flüssigkeitszuflusses mit zwei Behältern (101, 102) für Wasser und Brennstoff verbunden ist,

- einer Oxydationselektrode (2-2),
- einer Oxydationsmittelkammer, die neben der Oxydationselektrode (2-2) vorgesehen ist und mit einem Oxydationsmittel (7) beschickt wird,
- einem Pegelfühler (12) im Brennstoffkreislaufsystem zur Feststellung des Flüssigkeitsstands im System, wobei das Ausgangssignal des Pegelfühlers (12) zur Steuerung der Dosiervorrichtung (111) dient, sowie
- einem Elektrolyt in einer Elektrolytkammer (3) zwischen der Brennstoffelektrode (2-1) und der Oxydationselektrode (2-2), dadurch **gekennzeichnet,** daß
- der erste Behälter (101) zur Aufnahme eines Brennstoff/ Wasser-Gemisches mit hohem Wassergehalt vorgesehen ist, die Dosiervorrichtungen (111) an den ersten Behälter (101) angeschlossen sind,
- der zweite Behälter zur Aufnahme eines Brennstoff/ Wasser-Gemisches mit hohem Brennstoffgehalt vorgesehen ist,
- ein Detektor (13, Fig. 6; 15, Fig. 7; 16, Fig. 8) in dem Kreislaufsystem vorgesehen ist zur Feststellung der Brennstoffkonzentration des Brennstoffgemisches in dem Kreislaufsystem bzw. des Ausgangs der Brennstoffzelle bzw. des Laststroms der Brennstoffzelle und
- die Dosiervorrichtungen (112) mit dem zweiten Behälter (102) verbunden sind und nach Maßgabe des Ausgangssignals des Detektors (13, 15, 16) (Fig. 6) gesteuert werden.

2. Flüssigbrennstoffzelle nach Anspruch 1, dadurch gegekennzeichnet, daß die Dosiervorrichtungen (111, 112) aus Ventilen bestehen.

3. Füssigbrennstoffzelle nach Anspruch 1, dadurch gekennzeichnet, daß die Dosiervorrichtungen (111, 112) aus Pumpen bestehen.

4. Brennstoffzelle nach Anspruch 1 bis 3, dadurch gekennzeichnet, dass der erste Behälter (101) vorgesehen ist für ein Brennstoff/Wasser-Gemisch mit hohem Wassergehalt mit einem Mol-Verhältnis von Brennstoff zu Wasser von nicht mehr als 1 und der zweite Behälter (102) vorgesehen ist für ein Brennstoff/Wasser-Gemisch mit hohem Brennstoffgehalt mit einem Molverhältnis von Wasser zu Brennstoff nicht über 5.

5. Brennstoffzelle nach einem der Ansprüche 1 bis 4, dadurch gekennzeichnet, daß der Brennstoff Methanol ist.

6. Brennstoffzelle nach einem der Ansprüche 1 bis 5, dadurch gekennzeichnet, daß Mittel zur Rückgewinnung von Wasser vorgesehen sind, das von der Oxydationsmittelkammer (5) in den ersten Behälter (101) abgeführt wird.

7. Brennstoffzelle nach Anspruch 6, dadurch gekennzeichnet, daß die Wasserrückgewinnungsmittel (27) aus einer Wasserrückgewinnungsfalle bestehen.

8. Brennstoffzelle nach einem der Ansprüche 1 bis 7, dadurch gekennzeichnet, daß der Detektor (13) die Brennstoffkonzentration durch elektrochemische Reaktionen feststellt und folgende Merkmale aufweist:
eine Anode (517) bestehend aus einer Anodenplatte (517a) mit einer Katalysatorschicht (521) und einer darauf befindlichen brennstoffsteuernden Schicht (517b) mit gesteuerter Brennstoffdurchlässigkeit;
eine Kathode (518), eine Stromquelle (519) und einen Stromfühler (520), der mit der Anode (517) und der Kathode (518) in Reihe geschaltet ist, welche in die Brennstoffmischung eintauchen (Fig. 9).

9. Brennstoffzelle nach Anspruch 8, dadurch gekennzeichnet, daß die Anode (517) eine zweite brennstoffsteuernde Schicht (517c) aufweist, die auf der brennstoffsteuernden Schicht (517b') vorgesehen ist (Fig. 10).

10. Brennstoffzelle nach Anspruch 8 oder 9, dadurch gekennzeichnet, daß die Kathode (518) eine Kathodenplatte (518a) aufweist, die nicht aus Platin besteht und auf der eine Katalysatorschicht (518b) aufgebracht ist (Fig. 10).

11. Brennstoffzelle nach einem der Ansprüche 8 bis 10, dadurch gekennzeichnet, daß die Kathode 518 eine Kathodenplatte (518a) aufweist, die nicht aus Platin besteht, eine darauf befindliche elektrisch leitende poröse Schicht (518c), sowie eine Katalysatorschicht (518b) über der porösen Schicht (Fig.11).

12. Brennstoffzelle nach einem der Ansprüche 8 bis 11, dadurch gekennzeichnet, daß die brennstoffsteuernde Schicht (517b') aus Kohlefaserpapier besteht, das erhältlich ist durch Behandlung mit einer Suspension feiner Polytetrafluoräthylen-Teilchen und darauffolgendes trockenes Erhitzen.

13. Brennstoffzelle nach einem der Ansprüche 8 bis 12, dadurch gekennzeichnet, daß die brennstoffsteuernde Schicht (517b') hergestellt ist aus einem porösen Kohlenstoffblatt, aus gesintertem Metall, aus isolierender gesinterter Keramik oder aus porösem organischen Material.

14. Brennstoffzelle nach einem der Ansprüche 8 bis 13, dadurch gekennzeichnet, daß die Katalysatorschicht (521) auf einer Seite der brennstoffsteuernden Schicht (521b') aufgebracht ist durch Kneten eines Platinträgerkatalysators mit einer Suspension feiner Polytetrafluoräthylen-Teilchen, Aufbringen der Mischung auf eine Seite der brennstoffsteuernden Schicht (517b') und nachfolgendes trockenes Erhitzen.

15. Brennstoffzelle nach einem der Ansprüche 8 bis 14, dadurch gekennzeichnet, daß die Anodenplatte (517a) aus Tantalum hergestellt ist.

# F I G. I PRIOR ART

# F I G. 2 PRIOR ART

# F I G. 3

CELL VOLTAGE (V)

CONSTANT CURRENT

$C_{m1}$    $C_{m2}$

FUEL CONCENTRATION $C_m$ IN THE FUEL CHAMBER ( mol / l )

13

F I G. 4  PRIOR ART

F I G. 5
PRIOR ART

<u>13</u>

F I G. 6

# FIG. 7

# FIG. 8

# F I G. 9

# F I G. 10

# F I G. II

# F I G. 12